# FASCICULE DE BREVET EUROPEEN

(11) **EP 2 629 049 B1**
(45) Date de publication et mention de la délivrance du brevet: **16.10.2019**
(21) Numéro de dépôt: 12199055.0
(22) Date de dépôt: 21.12.2012
(51) Int. Cl.: G01B 5/012, G01B 11/00

(54) **Palpeur**
Messtaster
Touch probe

(30) Priorité: 20.02.2012 EP 12156134; 05.11.2012 EP 12191264
(43) Date de publication de la demande: 21.08.2013
(73) Titulaire: TESA SA, 1020 Renens (CH)
(72) Inventeur: Mariller, Serge, 1033 Cheseaux-sur-Lausanne (CH); Meleddu, Antonio, 1007 Lausanne (CH); Vullioud, Benjamin, 1124 Gollion (CH)
(74) Mandataire: P&TS SA (AG, Ltd.)

(56) Documents cités:
- EP-A1- 2 615 425
- WO-A2-2012/007561
- JP-A- 2005 315 633
- JP-A- 2007 101 491
- US-A- 5 118 956
- US-A1- 2004 125 382
- US-A1- 2006 070 253
- US-A1- 2010 325 907
- US-A1- 2011 013 199

## Description

### Domaine technique

La présente invention concerne des palpeurs ou sondes de contact pour des machines de mesure de coordonnées et notamment, mais pas exclusivement, des sondes de contact de type à déclenchement.

### Etat de la technique

Les palpeurs et leur utilisation avec des machines de mesure pour mesurer des coordonnées de la surface d'une pièce mécanique sont bien connus dans le domaine de la métrologie. Dans un cas typique une sonde de contact comporte une interface mécanique pour le montage sur la plateforme mobile d'une machine de mesure, et un stylet, avec une sphère en rubis à son extrémité, destiné à contacter la surface à mesurer. Lorsque le stylet touche la pièce et est déplacé de sa position de repos, la sonde déclenche un signal électrique, indiquant qu'un contact a eu lieu. Ce signal est transmis à une unité de contrôle qui enregistre les coordonnées instantanées de la machine et calcule les coordonnées du point de contact sur la pièce.

On connait également des sondes analogiques, dites aussi sondes à balayage, capables de mesurer la déflexion du stylet selon un ou plusieurs axes. Ces sondes sont utilisées, comme leur nom l'indique, en balayant la surface de la pièce et en mesurant les coordonnées le long d'un parcours.

Dans une variante connue, par exemple par EP0764827, US4270275 ou US6760977, le stylet est fixé sur un support avec trois goupilles radiales disposées symétriquement, chacune reposant sur deux sphères solidaires du corps du palpeur. Cette disposition constitue une liaison isostatique avec six points de contact indépendants; la position relative du stylet par rapport au corps du palpeur est ainsi définie avec précision. Le signal de déclenchement est généré lorsqu'une des goupilles se soulève des deux sphères sur lesquelles elle est normalement appuyée, interrompant ainsi le contact électrique entre les deux sphères. Ces palpeurs de simple fabrication allient fiabilité et précision, mais souffrent de plusieurs limitations. Notamment la sensibilité de la touche à une force transversale n'est pas constante, mais varie selon l'orientation de la force externe, présentant trois lobes en correspondance des directions des trois goupilles. Cette variation de la sensibilité est préjudiciable à la répétabilité du déclenchement et donc à la qualité de la mesure. Cette anisotropie peut être réduite an altérant la disposition des goupilles, par exemple comme décrit en EP1610087 ou DE3713415, sans toutefois l'éliminer complètement.

La demande de brevet EP0360853 tente de remédier à ces problèmes en proposant un palpeur dans lequel le circuit électrique est remplacé par des jauges de contrainte, directement sensibles à la force appliquée.

Dans d'autres réalisations, par exemple les palpeurs décrits dans les documents, US5435072 et EP0415579, le contact entre le stylet et la pièce à mesurer est détecté par un capteur de vibrations, ou par un capteur optique.

WO2012007561 décrit un dispositif de mesure pour déterminer la position d'une source lumineuse par rapport à un détecteur d'image et un réseau fixes.

US2006070253 décrit un dispositif à mesurer tridimensionnelle équipé d'un dispositif de réduction des vibrations. Dans un mode de réalisation, le positionnement du palpeur est déterminé par un détecteur optique.

US2011013199 décrit un palpeur pour un dispositif à mesurer tridimensionnelle dont le mouvement est détecté par un dispositif optique. La touche du palpeur est connectée au dispositif au travers d'un support comprenant un enchainement de trois éléments chacun permettant un mouvement dans une direction orthogonale aux autres.

JP2007101491 décrit un palpeur retenu à son boîtier au travers d'un disque métallique comprenant un élément élastique circulaire permettant un mouvement dans les trois directions. Le mouvement est détecté par un dispositif optique.

US2004125382 dévoile un palpeur dont son déplacement par rapport à la position de repos est déterminé par l'envoi d'un un faisceau laser sur un miroir solidaire à la touche du palpeur et dirigé vers un capteur.

US2010325907 concerne un dispositif à mesurer tridimensionnelle comprenant un bras articulé et un détecteur de vibration équipé d'un accéléromètre et d'un capteur de température.

JP2005315633 concerne un procédé et un dispositif pour le positionnement d'un tableau de microlentilles par rapport à une surface réceptrice d'un capteur d'image. Le procédé et le dispositif comprennent des moyens d'acquisition d'images afin de piloter le positionnement relatif entre ces deux éléments.

EP2615425 décrit un palpeur pour un dispositif à mesurer tridimensionnelle dont le mouvement est détecté par un dispositif optique.

### Bref résumé de l'invention

Un but de la présente invention est de proposer un palpeur exempt des inconvénients des palpeurs connus, et notamment présentant une sensibilité constante aux forces latérales.

Un autre but de la présente invention est de proposer un palpeur plus sensible et précis des palpeurs de l'art antérieur.

Ces buts sont atteints par un palpeur présentant les caractéristiques des revendications annexées.

### Brève description des figures

Des exemples de mise en oeuvre de l'invention sont indiqués dans la description illustrée par les figures annexées dans lesquelles :
La figure 1 illustre un palpeur selon l'invention, sectionné.
La figure 2 illustre schématiquement un masque optique utilisable dans le cadre de l'invention.
Les figures 3a à 3c montrent un capteur d'image partagé en quatre quadrants .
La figure 4 montre schématiquement un circuit de traitement utilisable dans le cadre de l'invention.
Les figures 5a, 5b, et 6 illustrent des structures élastiques utilisables dans le cadre de l'invention.
Les figures 7 et 8 montrent une variante de l'invention en éclaté et en section.
Les figures 9a et 9b illustrent deux possibles formes d'exécution de la structure élastique utilisée dans le mode de réalisation des figures 7 et 8.
La figure 10 montre une autre vue de la structure élastique représentée aux figures 9a et 9b.
La figure 11 est une section de l'élément élastique de la figure 9b dans laquelle les degrés de liberté sont représentés.
La figure 12 illustre une variante du capteur optique d'image de l'invention surmonté par un masque optique comprenant un réseau de microlentilles.
Les figures 13a et 13b illustrent deux variantes de l'invention avec une paire de capteurs disposés côte à côte.

### Exemple(s) de mode de réalisation de l'invention

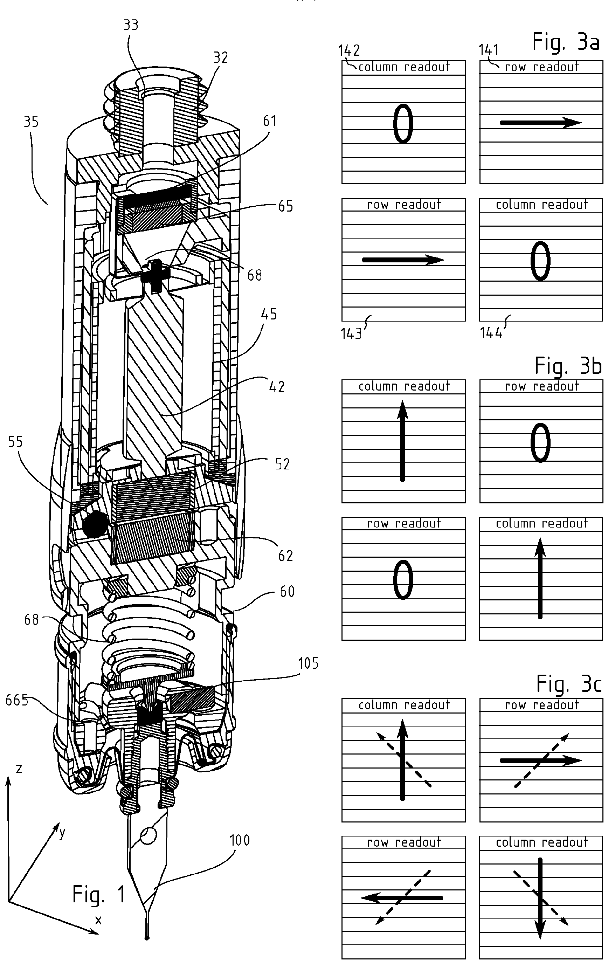

Avec référence à la figure 1, le palpeur de l'invention comprend, dans un mode de réalisation, un module de touche 60 avec un stylet 100 monté sur un support 105 maintenu élastiquement par le ressort 66 dans une position de repos définie par les six points de contact entre trois goupilles 665 (partiellement visibles) du support et six billes (non représentées) solidaires du module de touche. Cette disposition permet au stylet de se déplacer sous l'action d'une force externe, et de revenir exactement à la position de repos au cesser de cette force externe. Un certain espace (overtravel) étant requis pour arrêter le mouvement de la machine de mesure lorsque le système détecte un contact, ce montage élastique du stylet permet de limiter la force de contact pendant ce laps de temps.

La façon de monter le stylet 100 dans le module de touche 60 n'est pas une caractéristique essentielle de l'invention, et d'autres schémas de montage pourraient être employés, selon les nécessités, sans abandonner le domaine de l'invention.

Le module de touche 60 est préférablement connecté de façon amovible au corps du palpeur 35, afin de pouvoir facilement échanger de stylet selon les exigences de mesure. Préférablement le module de touche 60 et le corps du palpeur peuvent être connectés et séparés automatiquement, de manière compatible avec les systèmes de changement automatique d'outils utilisés couramment dans les machines de mesure. Dans l'exemple illustré, la connexion a lieu par le couple d'aimants 52 et 62 disposés l'un dans le corps du palpeur, et l'autre dans le module de touche. Dans d'autres variantes, la connexion pourrait être réalisée par un connecteur mécanique, par exemple le connecteur automatique décrit dans le document EP1577050 au nom de la demanderesse. Si la modularité n'est pas requise, le module de touche et le corps du palpeur pourraient être connectés de manière permanente.

Le corps de la sonde 35 est équipé d'un dispositif de connexion 32 pour le fixer sur la plateforme mobile d'une machine à mesurer. Dans l'exemple illustré la connexion est réalisée par une vis M8 standard 32, d'autres mécanismes de connexion sont toutefois possibles. Le contact électrique axial 33 permet l'alimentation de l'électronique interne au corps du palpeur de la part d'une source d'alimentation externe, comme on le verra plus loin. Si nécessaire, l'unique contact 33 pourrait être remplacé par une pluralité de contacts.

Le module de touche est solidaire, par les aimants 52, 62 ou tout autre moyen de connexion idoine, d'un support 55 lequel est maintenu en position à l'intérieur du corps du palpeur 35 par une structure élastique 45 de façon à pouvoir suivre, dans des limites prédéterminées, les déflexions du stylet selon les axes x, y, z. La structure élastique peut, dans le cadre de la présente invention, présenter diverses formes. On dimensionnera, préférablement, la structure 45 de façon à qu'elle présente la même élasticité dans les trois directions.

La tige 42 est inférieurement solidaire du support 55 et porte à son extrémité supérieure une source lumineuse 68, par exemple une diode électro lumineuse (LED). Les mouvements déflexions du stylet sont ainsi convertis en déplacements proportionnels de la source lumineuse 68.

Selon un aspect important de l'invention, le corps du palpeur comprend également un capteur d'image, par exemple un capteur CCD 61 ou tout autre capteur optique d'image approprié, juxtaposé à la source lumineuse 68 de manière à recevoir la lumière émise par celle-ci. Un masque optique 65 codé est interposé sur le parcours lumineux entre la source 68 et capteur d'image 61. Le masque optique 65 projette sur le capteur une distribution non uniforme d'intensité lumineuse qui se déplace suivant les déplacements de la source LED 68. Un circuit de traitement, préférablement intégré sur le même chip de silicium du capteur d'image 61 détermine la déflexion du stylet selon les trois dimensions x, y, z relativement au corps du palpeur à partir de la distribution de l'intensité lumineuse sur la surface du capteur.

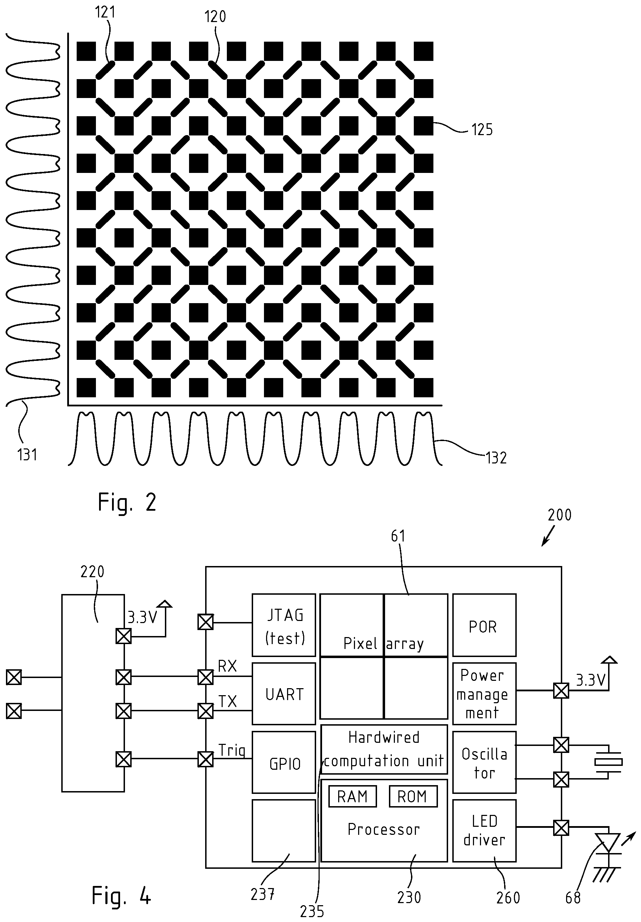

Les principes d'opération du transducteur constitué par la source 68, le masque 65 et le capteur d'image 61 sont décrits par les documents EP1750099B1, EP2169357A1 et WO2010112082A1, et ne seront pas analysés ici en détail. Dans l'exemple représenté sur la figure 2 le masque optique 65 porte un code bidimensionnel comprenant un réseau régulier de carreaux 125 et un code composé par un réseau de segments diagonaux. Dans l'exemple montré, par exemple, les segments parallèles au segment 121 encodent une valeur binaire '1', tandis que les segments parallèles au segment 120 encodent une valeur binaire '0'.

Avantageusement, le code bidimensionnel représenté par les segments permet un positionnement absolu avec la résolution du réseau des carreaux 125, tandis que l'interpolation des signaux 131 et 132, obtenus par la projection selon les axes de la distribution lumineuse, permet une détermination précise de la position relative en x et y. D'autres dispositions sont toutefois possibles.

Afin d'accélérer la lecture et le traitement, les pixels sont optionnellement groupés en zones, chaque zone étant dédiée à une mesure déterminée et constituant en effet un capteur indépendant. Dans l'exemple illustré sur la figure 3a, les pixels du détecteur d'image 61 sont arrangés en quatre quadrants, 141, 142, 143, 144. Les quadrants 141 et 143 arrangés diagonalement sont arrangés pour déterminer les déplacements dans la direction x, tandis que les deux autres quadrants sont arrangés pour déterminer les déplacements dans la direction y. Avec référence à l'exemple montré sur la Figure 2, le circuit de traitement pourra se limiter au calcul d'une seule des deux projections 131 et, respectivement 132 dans chacun des quadrants, selon la direction de déplacement que l'on entend mesurer, limitant ainsi le nombre d'opérations. Le code enregistré dans le masque optique 65 pourrait aussi être partagé en quadrants, et simplifié en conséquence. Lorsque les deux projections X et Y sont utilisées pour déterminer la position, le capteur 2D peut être simplifié à deux capteurs 1D qui mesurent chacun l'intensité de lumière sur une ligne en X ou Y. Un réseau de fibres optiques parallèles et reliées à un capteur (CCD) linéaire peut assurer cette fonction.

Selon un mode de réalisation alternatif, non illustré, le masque optique n'est pas présent, et on utilise en revanche une source lumineuse non uniforme, soit une source laquelle génère une distribution d'intensité lumineuse non uniforme sur la surface du capteur d'image 61. On pourrait employer à cette fin une LED avec un profil d'émission hautement anisotrope, une diode laser, un système optique générant des franges d'interférence, ou toute autre source non uniforme appropriée qui permet au circuit de traitement de déterminer la déflexion du stylet selon les trois dimensions x, y, z à partir de la distribution de l'intensité lumineuse sur la surface du capteur.

Selon une autre variante non illustrée, le masque optique ne comporte pas une pluralité de régions transparentes et opaques, comme sur la figure 3, mais une disposition appropriée de régions transparentes avec des caractéristiques optiques différentes, de manière à générer une distribution d'intensité lumineuse variable sur la surface du capteur. Avantageusement, on peut utiliser dans le masque optique un réseau de lentilles qui augmente l'intensité et le contraste de la distribution lumineuse sur le capteur.

La figure 3a illustre la situation dans laquelle on a un déplacement de la source 68 selon l'axe x. Les quadrants 141 et 143 enregistrent un même déplacement, tandis que les deux autres quadrants ne relèvent aucune variation. Inversement, lorsque le déplacement est uniquement dans la direction de l'axe y, les deux quadrants 142 et 144 enregistrent un déplacement identique, et rien n'est mesuré par les quadrants 141 et 142, comme on peut le voir sur la figure 3b.

La figure 3b illustre la situation qui se présente lors d'un déplacement selon l'axe Z. En ce cas c'est l'échelle de l'image projetée par le masque 65 qui change. Les quadrants 141 et 143 mesurent des déplacements opposés, et de même les quadrants 142 et 144. Dans un cas général, ou pourra décomposer le mouvement relatif de la source 68 en une superposition de mouvements en x, y, et z.

Cette variante de l'invention comporte quatre capteurs d'image, chacun adapté pour mesurer une coordonnée de la position de la distribution lumineuse projetée par le masque.

Dans l'exemple décrit, l'image du masque projetée sur ledit capteur optique d'image change en fonction des déplacements de la touche 100 car la source lumineuse 68 est entraînée par les déplacements de la touche relativement au dit organe fixe. On pourrait aussi imaginer, tout en restant dans le cadre de l'invention, d'entraîner par la touche le masque ou le capteur d'image, avec le même effet. L'invention comprend aussi des variantes dans lesquelles source, masque et capteur restent fixes relativement au corps de la sonde, mais le parcours optique comprend un autre élément optique mobile apte à modifier l'image sur le capteur en fonction des déplacements de la touche 100, par exemple un miroir, une lentille, un prisme, ou tout autre élément optique ou combinaison d'éléments optiques entraînés par la touche 100.

Les déplacements de la source lumineuse 68 sont proportionnels à ceux du stylet de contact 100. Le circuit de traitement peut donc déclencher un signal de contact lorsque le déplacement de la touche dépasse un seuil déterminé. Avantageusement le seuil de déclenchement peut être modifié dynamiquement en correspondance avec les conditions de mesure, en reprogrammant le circuit de traitement de manière appropriée. On pourrait par exemple augmenter la valeur du seuil lorsque la machine de mesure se déplace rapidement, afin d'éviter des faux signaux déterminés par les vibrations, ou en correspondance des accélérations et décélérations du palpeur, et le réduire quand la machine se meut lentement pour rechercher la précision maximale. On pourrait aussi moduler le seuil de déclenchement en fonction du stylet employé, en choisissant un seuil plus grand lorsqu'on monte des stylets plus longs et lourds, donc plus sensibles aux vibrations.

Selon un aspect de l'invention, le circuit de traitement peut aussi effectuer une validation du signal de déclenchement, et distinguer les signaux dérivés d'un véritable contact de la touche 100 avec une pièce à mesurer, de faux signaux dus, par exemple, aux vibrations. La discrimination peut être effectuée sur la base de la durée du signal de déflexion ou sur son profil temporel, par exemple.

Le palpeur peut aussi être utilisé en un mode de balayage, dans lequel le circuit de traitement indique la déflexion du stylet selon un ou plusieurs axes, mesurée par le détecteur optique.

Selon une variante non illustrée, le capteur optique pourrait présenter une surface non plane, par exemple en toit ou en pyramide, pour augmenter la récolte de lumière et la sensibilité aux déplacements axiaux.

La figure 4 illustre schématiquement une structure possible d'un circuit de traitement 200 selon un aspect de l'invention. Avantageusement le capteur optique 61 est intégré dans le même circuit intégré du circuit de traitement. Le circuit 200 comprend en cet exemple un microprocesseur 230 et une unité logique câblée 235 pour effectuer des opérations de traitement des pixels du capteur 61, par exemple projections, moyennes et/ou corrélations. L'unité 237 est un module arithmétique consacré au calcul de fonctions mathématiques ou trigonométriques, par exemple un module utilisant les techniques CORDIC (COordinate Rotation Digital Computer : calcul numérique par rotation de coordonnées).

Préférablement, le circuit 200 comprend aussi des capteurs de l'environnement, par exemple un accéléromètre et/ou un capteur de température. L'accéléromètre est utilisé, par exemple, pour déterminer le seuil dynamique du signal de déclenchement, ou si le palpeur a subi un choc. Le signal fourni par le capteur de température est utilisé, dans le circuit 200, pour compenser les erreurs thermiques.

Selon une variante de l'invention, le palpeur pourrait comprendre une pluralité de détecteurs d'image 61, avec un seul circuit de traitement en commun, ou chacun équipé d'un propre circuit de traitement, ou avec plusieurs circuits de traitement, chacun arrangé pour traiter les images enregistrées par un groupe de plusieurs capteurs d'image.

Préférablement le processeur 230 est programmé ou arrangé pour déterminer la position de la source lumineuse 68, et par conséquent la position de la touche 100, à partir de la distribution spatiale d'intensité lumineuse sur le capteur optique d'image 61 ou sur les capteurs optiques d'image 61 et pour générer un signal de position, ou plusieurs signaux de position représentatifs de la position et/ou de la déflexion, de la touche 100.

Le circuit de traitement présente aussi une unité d'entrée/sortie 220, arrangé pour transmettre les signaux de position à la machine de mesure, selon un format déterminé. Lorsque le palpeur est utilisé comme palpeur de déclenchement, le signal de position peut être un signal binaire avec deux valeurs possibles, un pour indiquer une déflexion essentiellement nulle, et l'autre pour indiquer une déflexion correspondante au dépassement d'une force de déclenchement prédéterminée.

Avantageusement, de déclenchement peut être transmis sous forme de variation du courant électrique absorbé par le palpeur. Cela permet l'utilisation du palpeur de l'invention en replacement des palpeurs à déclenchement classiques. Avantageusement, le circuit de traitement 230 dispose des valeurs de déflexion de la touche en trois coordonnées, et peut donc calculer la force de contact agissant sur la touche pour n'importe quelle direction d'action. Le palpeur de l'invention peut ainsi fournir un signal de déflexion qui dépend de manière isotrope de la force agissant sur la touche. Un autre avantage de la présente invention, lorsqu'elle est appliquée à un palpeur à déclenchement, est que le seuil de déclenchement peut être facilement reprogrammé.

Cette dernière variante de l'invention peut être utilisée pour des mesures de déclenchement, dans lesquelles la machine de mesure est programmée pour amener la touche 100 en contact ponctuel avec la surface de la pièce à mesurer, et le palpeur transmet à la machine un signal de déclenchement à l'instant du contact, permettant le calcul, avec un logiciel approprié, des coordonnées du point de contact.

Selon une variante de l'invention, le processeur 230 est programmé ou arrangé pour générer un signal représentant avec continuité la position et/ou la déflexion de la touche 100 en une, deux, ou préférablement en trois axes de mesure X, Y, et Z. Le palpeur peut alors encoder la position et/ou la déflexion de la touche 100 en un format numérique prédéterminé et l'envoyer par l'unité 220 à la machine de mesure.

Cette dernière variante de l'invention peut être utilisée pour des mesures de balayage, dans lesquelles la machine de mesure fait parcourir à la touche 100 une trajectoire en contact avec la surface de la pièce à mesurer, et le palpeur transmet à la machine des valeurs de déflexion qui permettent de calculer, avec un logiciel approprié, les coordonnées des points de contact le long de la trajectoire.

Pour assurer la compatibilité avec les systèmes de mesure existants, on peut utiliser un ou plusieurs convertisseurs de format numérique-analogique (DAC) pour générer des signaux analogiques représentant la position et/ou la déflexion de la touche 100 selon des axes de mesure déterminés. Ces convertisseurs pourraient être intégrés dans le palpeur, ou dans une unité externe.

Selon un autre aspect de l'invention, l'unité d'entrée/sortie 220 permet une communication bidirectionnelle avec une unité externe, par exemple le contrôleur de la machine de mesure ou un système de mesure par ordinateur. Le palpeur peut alors envoyer par l'unité 220, des signaux de déclenchement et/ou des mesures de déflexion, et/ou des signaux de validation, dans un format approprié. Le palpeur peut aussi recevoir, par l'unité 220, des données de calibration, ou les valeurs du seuil de déclenchement, ou tout autre signal.

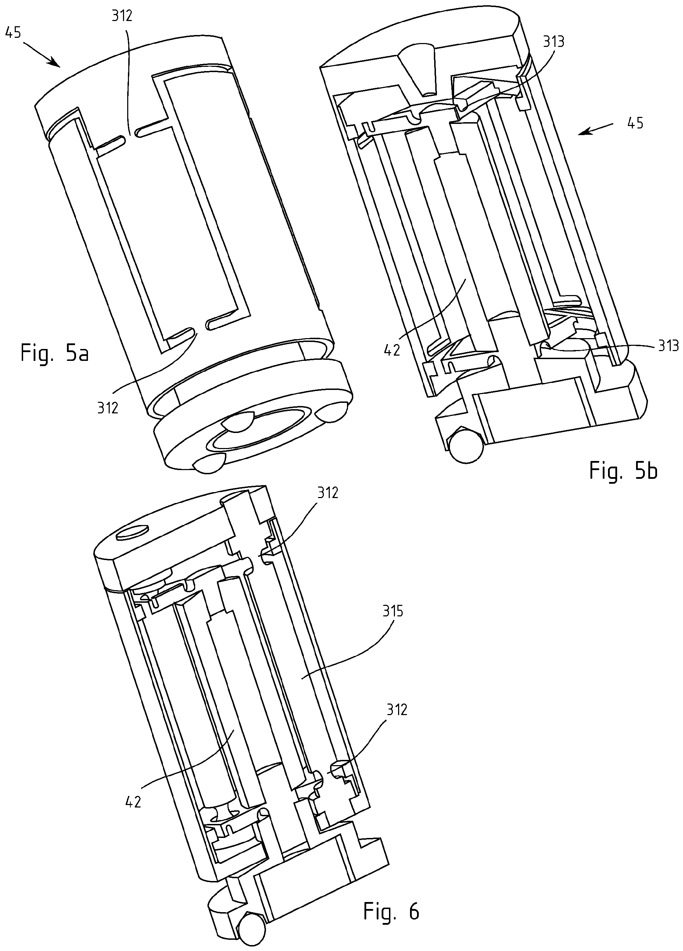

Les figures 5a, 5b illustrent schématiquement des structures flexibles 45 utilisables dans le cadre de l'invention. Ces structures présentent 3 colonnes (315), 3 plaques ou autres éléments rigides verticaux avec, à chacune des 2 extrémités un élément (312) d'une souplesse latérale beaucoup plus élevée. La déflexion axiale de ces structures est assurée par des bras radiaux avec des cols (313). Les éléments verticaux peuvent être monobloc ou séparés. La figure 6 illustre une variante dans laquelle la flexibilité latérale est assurée par les colonnes 315. D'autres dispositions sont toutefois possibles.

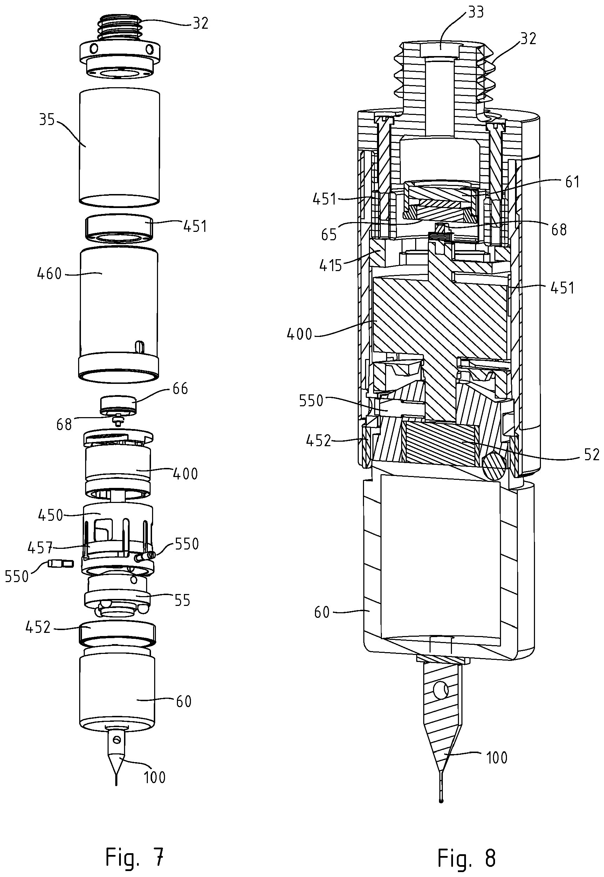

Une forme d'exécution préférée du palpeur de l'invention sera maintenant décrite avec référence aux figures 7, 8, 9a, 9b et 10. Selon cette variante le palpeur comporte une structure élastique comme déjà mentionné auparavant consistant en une pièce métallique intégrale 400 qui relie le support 55 à son extrémité inférieure et la source lumineuse 68 à l'extrémité opposée.

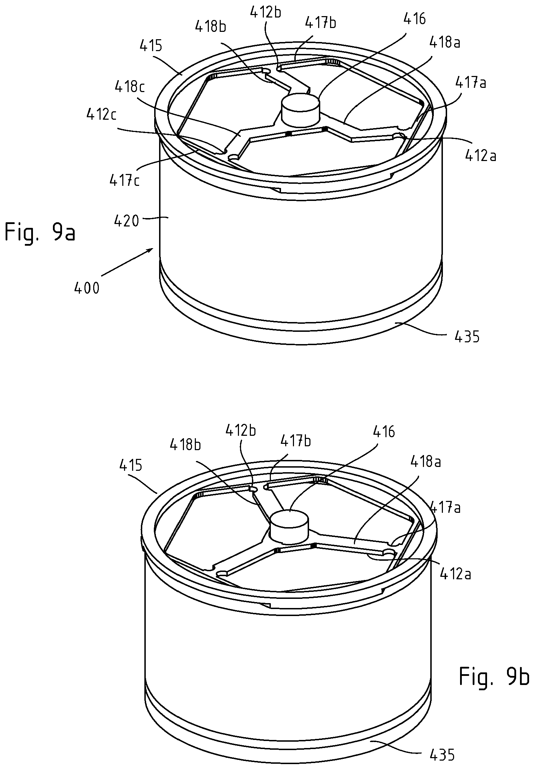

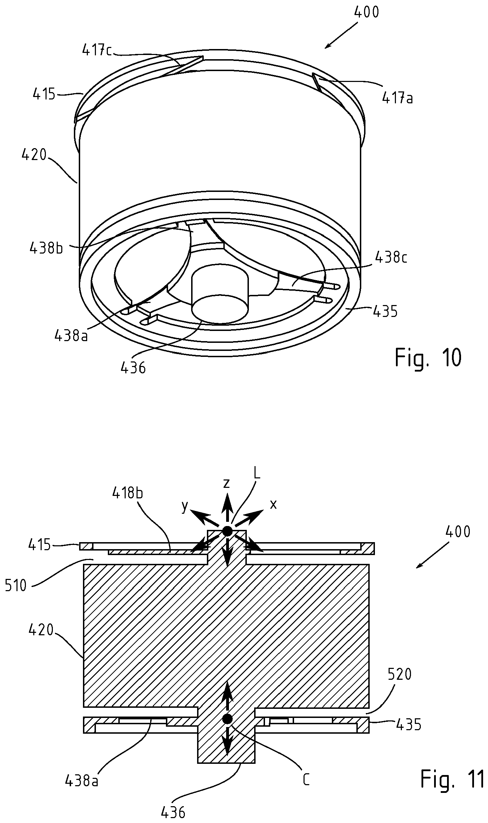

La structure élastique 400 est plus clairement visible sur les figures 9a, 9b et 10, les figures 9a et 9b représentant deux possibles variantes de la partie flexible supérieure, comme on le verra plus loin. Elle a une forme essentiellement cylindrique, et est réalisée d'une seule pièce métallique intégrale sans assemblages ou soudures. Préférablement la structure élastique 400 est obtenue par usinage, c'est-à-dire par tournage et fraisage d'un cylindre plain d'un matériau approprié, par exemple acier trempé. Toutefois, on pourrait aussi utiliser, dans le cadre de l'invention, d'autres techniques de fabrication, par exemple électroérosion, découpe laser, ou tout autre procédé d'enlèvement de matière approprié. On pourrait également réaliser la structure élastique 400 par moulage, ou par des procédés de fabrication additive, par exemple par frittage laser sélectif, stéréolithographie, impression 3D.

Selon un aspect de l'invention, la structure élastique 400 comporte un corps central 420 essentiellement cylindrique et deux parties terminales supérieure et inférieure, séparées du corps cylindrique par les deux saignées 510 et 520 visibles sur la figure 10. La partie terminale inférieure comporte une saille centrale 436 sur laquelle est fixé, par exemple par chassage, le support du module de touche 55. La partie terminale supérieure a aussi une saille centrale 416 sur laquelle est montée la source lumineuse 68, par exemple par collage. Préférablement la source lumineuse est relié au circuit de traitement par des conducteurs flexibles ou un circuit imprimé flexible.

Les deux parties terminales comportent aussi chacune un anneau périphérique 435 respectivement 415 solidaire du corps du palpeur, tandis que la surface latérale du corps cylindrique 420 n'est pas en contact avec d'autres composantes et peut se déplacer sous l'effet des forces agissant sur la touche 100.

Les figures 9a, 9b illustrent deux possibles variantes de la partie terminale supérieure de l'élément élastique 400. Les deux variantes comportent trois poutres tangentielles 417a, 417b, 417c attachées par leurs extrémités à l'anneau périphérique 415 et trois bras radiaux 418a, 418b, 418c reliés d'une part au point de milieu de la poutre tangentielle correspondante, et d'autre part au centre de la partie terminale. Des encoches 412a, 412b, 412c forment des charnières élastiques et améliorent les caractéristiques de flexibilité de l'ensemble, notamment dans les directions axiales et latérales. Les deux variantes diffèrent essentiellement dans la forme des bras 412a-c qui sont droits dans la deuxième version, et présentent un angle plus ou moins accentué dans la première, afin d'en augmenter la flexibilité.

Avantageusement, la partie terminale supérieure de l'élément élastique 400 peut être réalisée avec des opérations d'usinage conventionnelles : Ou peut par exemple tailler les bras 418a-c à la fraise par la face supérieure, et détacher les poutres tangentielles 417a-c de l'anneau 413 par trois rainures droites fraisées 417a-c (mieux visibles sur la figure 10). La partie terminale est séparée du corps cylindrique 420 par la saignée 510 (figure 11).

La figure 10 illustre une possible structure pour la partie terminale inférieure de l'élément élastique 400. L'anneau périphérique 435 est relié à la partie centrale 436 par trois bras 438a-c qui présentent une voile centrale mince, afin d'augmenter la flexibilité de l'ensemble surtout dans la direction axiale. Par rapport à la partie terminale supérieure, la partie inférieure est adaptée pour se déformer sous une force axiale, et est relativement rigide dans les directions orthogonales à l'axe. Tout comme la partie supérieure, la partie terminale supérieure de l'élément élastique 400 peut être réalisée avec des opérations d'usinage conventionnelles.

La figure 11 montre l'élément flexible en section et les mouvements possibles par la flexibilité des parties terminales. Comme déjà mentionné, les anneaux périphériques 435 et 415 sont fixés au corps du palpeur, tandis que la saille inférieure 436 est relié à la touche par le support 55, et la saille supérieure 416 porte la source lumineuse. Les forces agissant sur le stylet 100 induisent différentes déformations dans les parties terminales selon les caractéristiques mécaniques respectives.

La partie terminale inférieure est conformée de manière à présenter une flexibilité importante par rapport aux forces axiales, et est en revanche relativement rigide par rapport aux forces transversales à l'axe car les voiles des bras 438a-c peuvent facilement se fléchir, mais la longueur des bras 438a-c est essentiellement immuable. Par conséquent le point 'C' situé à l'intersection des bras 438a-c se déplace selon l'axe 'z' dans la figure 11 mais reste essentiellement sur l'axe de l'élément élastique 400.

En même temps, la flexibilité indépendante des bras 438a-c consent, si le stylet 100 subit une force latérale, une rotation de l'élément 420 autour du point (C) dans les deux directions transversales 'x' et 'y'. On peut donc modéliser les contraintes introduites par la partie terminale inférieure comme une glissière permettant le déplacement axial du centre 'C' combinée avec une rotule de centre 'C'.

La partie terminale supérieure permet, grâce à la disposition des bras radiaux connectés à des poutres tangentielles, le déplacement de la source lumineuse au point 'L' selon les trois axes 'x', 'y', 'z'. La flexibilité desdits bras et poutres détermine les forces de rappel, ou les valeurs quantitatives de flexibilité selon les trois axes. Dans un cas typique, le palpeur de l'invention pourrait présenter une flexion de quelques dizaines de nm en X, Y et Z suite à une force de quelques grammes agissant sur le stylet dans les axes X, Y et Z.. Ces valeurs de flexibilité assurent une bonne sensitivité et des fréquences propres de vibration assez élevées au delà des fréquences de vibration typiques d'une CMM.

La disposition symétrique des bras 418a-c et 438 a-c permet d'obtenir une flexibilité hautement isotrope et essentiellement indépendante de la direction latérale de la force. L'invention n'est pas cependant limitée à des dispositifs avec trois bras et pourrait présenter deux, quatre ou plus bras, selon les circonstances.

L'assemblage de la structure élastique 400 dans le palpeur sera maintenant décrit avec références aux figures 7 et 8. Selon un mode préférentiel de réalisation, la structure élastique 400 est logée à l'intérieur d'une virole 450 avec des de branches flexibles 757. Lorsque la virole 450 est insérée à l'intérieur du tube 460 les branches 757 pincent l'anneau périphérique inférieur 435 le centrant en place. Axialement la face inférieure de la virole 452 appuie sur la bague filetée 452 et sa face supérieure soutien l'anneau périphérique supérieur 415 sur lequel est vissé une seconde bague filetée 451. De cette façon on obtient un serrage et le centrage précis de la structure élastique 400 dans l'axe du palpeur, par les deux anneaux périphériques supérieur et inférieur.

L'ébat du stylet et les déformations de la pièce élastique 400 sont limités par les trois vis 550 à 120° qui s'engagent dans des logements appropriés du support du module de touche 55. D'autres moyens de limitations sont toutefois possibles.

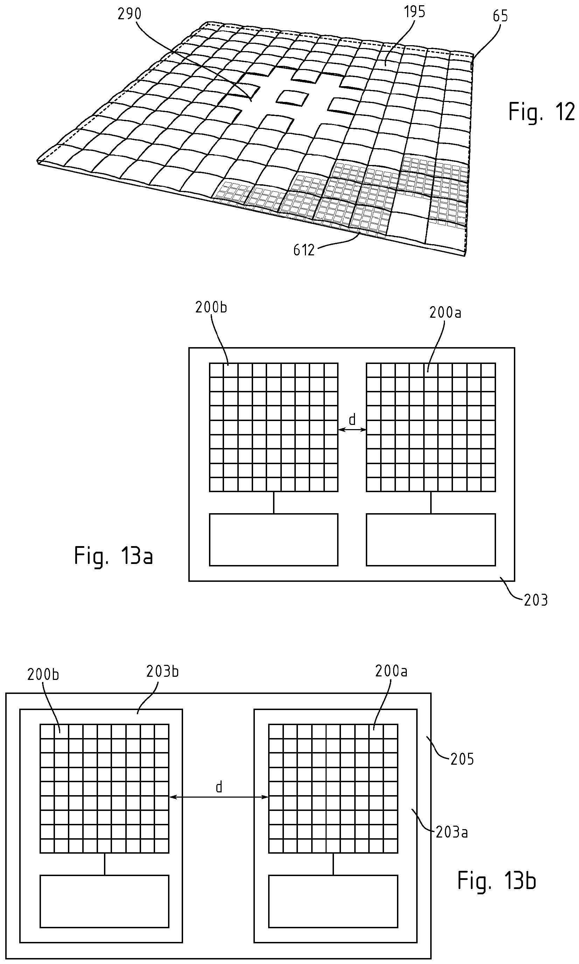

La Figure 12 illustre une variante du capteur optique d'image de l'invention dans laquelle le masque optique est composé par un réseau de mini-lentilles 195 qui projettent une distribution bidimensionnelle de la lumière provenant de la source mobile sur les photodétecteurs 612, chacun desquels correspond à un pixel de l'image enregistrée (seulement une partie des photodétecteurs est représentés, pour simplifier le dessin). Par rapport à la variante illustrée en précédence, les microlentilles permettent une plus grande efficacité optique et donc un rapport signal/bruit plus favorables sur les pixels.

L'image projetée par les mini-lentilles comporte une distribution bidimensionnelle de zone plus ou moins lumineuse, selon que le point considéré se trouve sensiblement dans l'axe d'une lentille ou entre deux lentilles adjacentes. Le processeur peut analyser cette distribution de lumière et déterminer avec précision la position de la source de lumière. La symétrie du réseau permet une détermination très précise de la position par interpolation de la distribution lumineuse.

Si toute la surface du masque 65 était occupée par un réseau parfaitement régulier symétrique en XY, la distribution lumineuse serait également symétrique et on pourrait uniquement obtenir une détermination incrémentale de la position en XY, avec une ambiguïté égale au pas du réseau. Préférablement le réseau 61 comporte une zone 290 avec des caractéristiques de transmission spécifiques et différentes du reste, afin de s'éloigner de la symétrie parfaite permettant ainsi une détermination absolue de la position en XY. Dans l'exemple illustré, la zone 290 est une zone centrale dépourvue de lentilles au centre du réseau, mais il est possible aussi d'envisager une zone spéciale 195 de forme différente, positionnée au bord du réseau, ou n'importe quelle disposition qui altère la symétrie du réseau.

La figure 13a illustre une disposition comprenant deux capteurs d'image fournissant chacun une détermination de la position en deux dimensions, et une façon d'obtenir une mesure de la position de la source lumineuse en trois coordonnées dans l'espace. Le capteurs d'image sont positionnés l'un à côté de l'autre séparés d'une distance 'd' parallèle, par exemple, à l'axe 'X'. Préférablement les capteurs 200a et 200b sont réalisés sur une plaquette de silicium commune 203, en sorte que la distance 'd' est déterminée exactement.

Lors des déplacements de la source lumineuse (non visible) selon les trois axes, les capteurs d'image donnent des valeurs de 'X' et 'Y' selon la tabelle suivante

**Tabelle 1**

| Déplacement source | 200a | | 200b | |
|---|---|---|---|---|
| | X | Y | X | Y |
| X croissant | croissant | constant | croissant | constant |
| X décroissant | décroissant | constant | décroissant | constant |
| Y croissant | constant | croissant | constant | croissant |
| Y décroissant | constant | décroissant | constant | décroissant |
| Z croissant | croissant | constant | décroissant | constant |
| Z décroissant | décroissant | constant | croissant | constant |

On voit donc que les mouvements en trois dimensions de la source peuvent être déterminés par l'analyse des positions en deux dimensions fournies par les deux capteurs 200a et 200b décalés d'une distance 'd'. On pourrait par exemple approximer les coordonnés 'X' et 'Y' par la moyenne des résultats obtenus par les capteurs 200a et 200b, et calculer la coordonnée 'Z' par la différence entre les coordonnées 'X' fournies par 200a et 200b.

Dans l'exemple de la figure 13b, les ceux capteurs 200a et 200b sont placés à une distance 'd' supérieure à celle de la figure 13a. Il en suit que les rayons provenant de la source lumineuse mobile incident sur les capteurs avec un angle plus élevé, et la sensibilité aux mouvements en 'Z' est plus élevée que dans l'exemple de la figure 13a. En cette variante, les capteurs sont chacun sur une plaquette de silicium individuelle 203a, 203b, et les deux plaquettes sont fixées sur un substrat commun 205.

## Revendications

1. Palpeur comprenant: un organe fixe (35) ; une touche (100) maintenue par un ou plusieurs éléments élastiques (45, 400) dans une position de repos par rapport audit organe fixe, ladite touche pouvant se déplacer à partir de ladite position de repos en réponse à une force de déflexion ; un système de détection des déplacements de la touche comprenant une source lumineuse (68) ; un capteur optique (61) d'image recevant la lumière émise par ladite source lumineuse; et un masque optique (65) interposé sur le parcours lumineux entre ladite source lumineuse (68) et ledit capteur optique (61) d'image;
dans lequel la touche est reliée de façon amovible au système de détection par une connexion magnétique (52,62) ou mécanique, une distribution spatiale d'intensité bidimensionnelle sur la surface du capteur optique d'image change en fonction des déplacements de ladite touche, le système de détection étant arrangé pour déterminer la position de la touche (100) à partir de ladite distribution spatiale d'intensité bidimensionnelle, détectée par ledit capteur optique d'image selon deux dimensions, et pour générer un signal ou plusieurs signaux représentatifs de la position et/ou de la déflexion de la touche (100).

2. Palpeur selon la revendication précédente, ledit capteur optique d'image étant un capteur 2D.

3. Palpeur selon l'une des revendications précédentes, comprenant en outre un circuit de traitement (200) arrangé pour déterminer la position et/ou la déflexion de la touche (100) selon un, deux, ou trois axes de mesure à partir de l'image enregistrée par le capteur optique (61) d'image et pour transmettre un signal de position représentant ladite position et/ou déflexion à une machine de mesure.

4. Palpeur selon la revendication 3, dans lequel le circuit de traitement (200) est arrangé pour déclencher un signal de contact lorsque la force agissant sur la touche (100) dépasse un seuil déterminé.

5. Palpeur selon la revendication 3, dans lequel le circuit de traitement (200) est arrangé pour générer un signal de déflexion qui représente avec continuité la position et/ou la déflexion de la touche (100) selon un, deux, ou trois axes de mesure.

6. Palpeur selon l'une des revendications précédentes, comprenant en outre un capteur de température, dans lequel le circuit de traitement est arrangé pour compenser les erreurs de température à partir du signal fourni par le capteur de température.

7. Palpeur selon l'une des revendications précédentes, comprenant un accéléromètre.

8. Palpeur selon l'une des revendications précédentes, comprenant une pluralité de capteurs optiques (200a, 200b)d'images recevant la lumière émise par ladite source lumineuse ; dans lequel une distribution spatiale d'intensité sur lesdits capteurs optiques d'image change en fonction des déplacements de ladite touche, le palpeur comprenant en outre un circuit de traitement arrangé pour déterminer les déplacements de la touche en trois dimensions à partir de la distribution de lumière enregistrée par les capteurs optiques d'image.

9. Palpeur selon l'une des revendications précédentes, dans lequel lesdits un ou plusieurs éléments élastiques (45,400) consistent en une pièce métallique monobloc.

10. Palpeur selon la revendication précédente, dans lequel ladite pièce métallique monobloc (45,400) a une forme essentiellement cylindrique avec deux éléments terminaux en correspondance des deux bases, ladite touche étant solidaire du centre (436) d'un élément terminal, et ladite source lumineuse étant solidaire du centre (416) de l'élément terminal opposé, chaque élément terminal présentant un anneau périphérique (415,435) solidaire du corps du palpeur (35) et une pluralité d'éléments déformables (412,417,418,438) consentant le déplacement selon trois axes de la source lumineuse (68).

11. Palpeur selon l'une des revendications précédentes, dans lequel ladite source lumineuse (68) est entraînée par les déplacements de la touche (100) relativement au dit organe fixe (35).

12. Palpeur selon l'une des revendications précédentes, dans lequel la touche est portée par un module (60) changeable comprenant un support de touche (105) maintenu élastiquement dans une position de repos par une pluralité d'éléments (665) de positionnement définissant six points de contact.

13. Palpeur selon l'une des revendications précédentes dans lequel lesdits éléments élastiques (45,400) comprennent des éléments rigides s'étendant selon une direction essentiellement axiale avec des élément souples(417) aux extrémités assurant une flexibilité latérale, et des bras (418) avec des cols (438) assurant une flexibilité axiale.

## Patentansprüche

1. Sonde, umfassend: ein feststehendes Element (35); einen Taster (100), der durch eine oder mehrere elastische Elemente (45, 400) in einer Ruheposition in Bezug auf das besagte feststehende Element gehalten wird, wobei der besagte Taster sich als Reaktion auf eine Ablenkungskraft aus der besagten Ruheposition bewegen kann; ein System zum Erfassen der Bewegungen des Tasters, umfassend eine Lichtquelle (68); einen optischen Bildsensor (61) zum Empfangen des von der besagten Lichtquelle emittierten Lichtes; und eine optische Maske (65), die auf dem Lichtweg zwischen der besagten Lichtquelle (68) und dem besagten optischen Bildsensor (61) angeordnet ist;
worin
der Taster durch eine magnetische (52, 62) oder mechanische Verbindung lösbar mit dem Erfassungssystem verbunden ist, wobei sich eine zweidimensionale räumliche Intensitätsverteilung auf der Fläche des optischen Bildsensors als eine Funktion der Bewegungen des besagten Tasters ändert, wobei das Erfassungssystem so angeordnet ist, um die Position des Tasters (100) aufgrund der besagten durch den besagten optischen Bildsensor entlang zwei Dimensionen erfassten zweidimensionalen räumlichen Intensitätsverteilung zu bestimmen und um ein Signal oder mehrere Signale, welche die Position und/oder die Ablenkung des Tasters (100) darstellen, zu erzeugen.

2. Sonde gemäss dem vorhergehenden Anspruch, wobei der besagte optische Bildsensor einen 2D-Sensor ist.

3. Sonde gemäss einem der vorhergehenden Ansprüche, ferner umfassend eine Verarbeitungsschaltung (200), welche zum Bestimmen der Position und/oder der Ablenkung des Tasters (100) gemäss einer, zwei oder drei Messachsen aus dem von dem optischen Sensor (61) aufgenommenen Bild und zum Übertragen eines Positionssignals, welches die Position und/oder die Ablenkung darstellt, an eine Messmaschine angeordnet ist.

4. Sonde gemäss Anspruch 3, worin die Verarbeitungsschaltung (200) so angeordnet ist, um ein Kontaktsignal auszulösen, wenn die auf den Taster (100) wirkende Kraft einen bestimmten Schwellenwert überschreitet.

5. Sonde gemäss Anspruch 3, worin die Verarbeitungsschaltung (200) so angeordnet ist, um ein Ablenksignal zu erzeugen, welches kontinuierlich die Position und/oder die Ablenkung des Tasters (100) in einer, zwei oder drei Messachsen darstellt.

6. Sonde gemäss einem der vorhergehenden Ansprüche, zudem umfassend einen Temperatursensor, worin die Verarbeitungsschaltung so angeordnet ist, um Temperaturfehler aus dem von dem Temperatursensor bereitgestellten Signal zu kompensieren.

7. Sonde gemäss einem der vorhergehenden Ansprüche, umfassend einen Beschleunigungsmesser.

8. Sonde gemäss einem der vorhergehenden Ansprüche, umfassend eine Vielzahl von optischen Bildsensoren (200a, 200b), welche das von der besagten Lichtquelle emittierte Licht empfangen; worin sich eine räumliche Intensitätsverteilung auf den besagten optischen Bildsensoren als eine Funktion der Bewegungen des besagten Tasters ändert, wobei die Sonde zudem eine Verarbeitungsschaltung umfasst, angeordnet zum Bestimmen der dreidimensionalen Tastenverschiebungen aus der Verteilung von durch optische Bildsensoren aufgenommenem Licht.

9. Sonde gemäss einem der vorhergehenden Ansprüche, worin das besagte eine oder die besagten mehreren elastischen Elemente (45, 400) aus einem einteiligen Metallteil bestehen.

10. Sonde gemäss dem vorhergehenden Anspruch, worin das einteilige Metallstück (45, 400) eine im Wesentlichen zylindrische Form mit zwei Anschlusselementen in Entsprechung zu den zwei Basen aufweist, wobei der besagte Taster einstückig mit der Mitte (436) eines Anschlusselements ist und die besagte Lichtquelle einstückig mit der Mitte (416) des gegenüberliegenden Anschlusselements ist, wobei jedes Anschlusselement einen peripheren Ring (415, 435) aufweist, welcher einstückig mit dem Sonde-Körper (35) ausgebildet ist, und mehrere verformbare Elemente (412, 417, 418, 438) aufweist, welche die Bewegung der Lichtquelle (68) entlang drei Achsen ermöglichen.

11. Sonde gemäss einem der vorhergehenden Ansprüche, worin die besagte Lichtquelle (68) durch die Bewegungen des Tasters (100) in Bezug auf das besagte feststehende Element (35) angetrieben wird.

12. Sonde gemäss einem der vorhergehenden Ansprüche, worin der Taster von einem veränderbaren Modul (60) getragen wird, welches eine Tastenhalterung (105) umfasst, die durch eine Vielzahl von sechs Kontaktpunkten definierenden Positionierungselementen (665) elastisch in einer Ruheposition gehalten wird.

13. Sonde gemäss einem der vorhergehenden Ansprüche, worin die besagten elastischen Elemente (45, 400) starre Elemente umfassen, welche sich im Wesentlichen in axialer Richtung erstrecken, wobei flexible Elemente (417) an den Enden für seitliche Flexibilität sorgen, und Arme (418) mit Krägen (438) die axiale Flexibilität gewährleisten.

## Claims

1. Touch probe comprising: a fixed member (35); a feeler (100) held by one or several elastic elements (45, 400) in a resting position relative to said fixed member, said feeler being capable of moving from said resting position in response to a deflection force; a system for detecting displacements of the feeler comprising a light source (68); an optical image sensor (61) receiving the light emitted by said light source; an optical mask(65) interposed on the light path between said light source (68) and said optical image sensor (61);
wherein
the feeler is removably connected to the detection system through a magnetic connection (52, 62) or a mechanical connection, wherein a two-dimensional spatial distribution of intensity on the surface of the optical image sensor changes according to the displacements of said feeler, with the detection system being arranged for determining the position of the feeler (100) from said two-dimensional spatial distribution of intensity, detected by said optical image sensor along two dimensions, and for generating a signal or several signals representing the position and/or the deflection of the feeler (100).

2. Probe according to the preceding claim, wherein the optical image sensor is a 2D sensor.

3. Probe according to one of the preceding claims, further comprising a processing circuit (200) arranged for determining the position and/or the deflection of the feeler (100) along one, two or three measuring axes from the image recorded by the optical image sensor (61) and for transmitting a position signal representing said position and/or deflection to a measuring machine.

4. Probe according to claim 3, wherein the processing circuit (200) is designed to trigger a contact signal when the force acting on the feeler (100) exceeds a determined threshold.

5. Probe according to claim 3, wherein the processing circuit (200) is designed to generate a deflection signal representing continuously the position and/or deflection of the feeler (100) along one, two or three measuring axes.

6. Probe according to one of the preceding claims, further comprising a temperature sensor, wherein the processing circuit is designed to compensate the temperature errors from the signal supplied by the temperature sensor.

7. Probe according to one of the preceding claims, comprising an accelerometer.

8. Probe according to one of the preceding claims, comprising a plurality of optical image sensors (200a, 200b) receiving the light emitted by said light source, wherein a spatial distribution of intensity on said optical image sensors changes according to the displacements of said feeler, with the probe further comprising a processing circuit designed to determine the displacements of the feeler in three dimensions from the light distribution recorded by the optical image sensors.

9. Probe according to one of the preceding claims, wherein said one or several elastic elements (45, 400) consist of a mono-bloc metallic part.

10. Probe according to the preceding claim, wherein said mono-bloc metallic part (45, 400) has an essentially cylindrical shape with two end elements corresponding to the two bases, said feeler being integrally united with the center (436) of an end element, and said light source being integrally united with the center (416) of the opposite end element, wherein each end element exhibits a peripheral ring (415, 435) integrally united with the probe body (35) and a plurality of deformable elements (412, 417, 418, 438) allowing the displacement of the light source (68) along three axes.

11. Probe according to one of the preceding claims, wherein said light source (68) is driven by the displacements of the feeler (100) relative to said fixed member (35).

12. Probe according to one of the preceding claims, wherein the feeler is borne by a changeable module (60) comprising a feeler support (105) held elastically in a resting position by a plurality of positioning elements (665) defining six contact points.

13. Probe according to one of the preceding claims, wherein said elastic elements (45, 400) comprise rigid elements extending along an essentially axial direction with flexible elements (417) at the ends ensuring lateral flexibility, and arms (418) with collars (438) ensuring axial flexibility.
